# EUROPEAN PATENT SPECIFICATION

(11) **EP 2 140 333 B1**
(45) Date of publication and mention of the grant of the patent: **27.03.2013**
(21) Application number: 07754885.7
(22) Date of filing: 03.04.2007
(51) Int. Cl.: G06F 1/32, H04N 5/63

(54) **SYSTEM AND METHOD FOR TOGGLING BETWEEN SYSTEM POWER MODES BASED ON MOTION DETECTION**
SYSTEM UND VERFAHREN ZUR UMSCHALTUNG ZWISCHEN SYSTEMLEISTUNGSBETRIEBSARTEN AUF DER BASIS VON BEWEGUNGSDETEKTION
SYSTÈME ET PROCÉDÉ BASCULANT ENTRE DES MODES DE PUISSANCE DE SYSTÈME BASÉS SUR UNE DÉTECTION DE MOUVEMENT

(43) Date of publication of application: 06.01.2010
(73) Proprietor: TTE Technology, Inc., Indianapolis, IN 46206 (US)
(72) Inventor: COOPER, Steven, L., Whitestown, IN 46075 (US); BURNETT, Angela, Indianapolis, IN 46268 (US)
(74) Representative: Chamberlain, Alan James
(86) International application number: PCT/US2007/008441
(87) International publication number: WO 2008/121113

(56) References cited:
- US-A- 5 752 044
- US-A1- 2002 080 132
- US-A1- 2004 051 813
- US-A1- 2005 044 241

## Description

### FIELD OF THE INVENTION

The present invention relates generally to power modes for an electronic device. More particularly, the present invention relates to toggling between a media device's power modes, such as an energy saving mode and a ready mode.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Due to increased expenses associated with providing energy and a desire to conserve natural resources, legislation and standards are being put in place to reduce inefficient consumption of energy. Indeed, current industry standards require that certain media devices, such as televisions, use a minimal amount of power while in certain power states or modes. For example, a television may be required to use below a certain level of power when it is in an off-state or a standby-state.

A typical standby-state for a television may require that the television function at a level where it can, at a minimum, detect an on-state request (for example, a signal indicating that the television should be completely powered) via a Front Panel Assembly (FPA) on the television and/or via a remote control adapted to transmit electronic communications to the television. For example, to maintain such functionality, some televisions enter a standby-state by continuing to power a main central processing unit (CPU) and associated chipsets of the television while powering down a main display of the television. Unfortunately, in view of the new energy conservation standards, even without having to power the main display, the power consumption for a television in this standby-state may be too great to meet specifications.

Some existing televisions further reduce power consumption by including a low-power microprocessor, which may also be referred to as a standby microprocessor. The low-power microprocessor may primarily function to detect an on-state request and then initiate a boot- up process of the television's main CPU and any other necessary chipsets. Accordingly, more television components, such as the main CPU and certain chipsets, can be powered down during a standby-state. Thus, the low-power, standby microprocessor may enable a television to meet energy conservation standards. However, newer televisions have increasingly large feature sets, underlying operating systems, and code bases, which result in fairly long boot-up sequences. These long boot- up sequences result in a lengthy time requirement to turn on a television. The delay in television viewing associated with the long boot- up time can be an annoyance for users. Accordingly, it may be desirable to provide a media device, such as a television, with power saving features that meet certain standards and that allow the media device to be powered up in a short period of time.

US 2005/0044241 describes a computer system power policy adjustment in response to an affirmative indication from a user. US 2002/0080132 describes computer screen power management through detection of user presence. US5,752,044 describes a computer system having multi-level suspend timers to suspend from operation in attended and unattended modes. US 2004/051813 describes a television power saving system in which a television receiver includes a presence detector for detecting the presence of a person in a room containing the television receiver.

EP 1892954, for example, discloses a broadcast receiving apparatus and starting method thereof in which the approach of a human being is detected by a human sensor. Prior to startup of the apparatus through a main switch and a remote controller a constituent portion (i.e. a video processing portion) made up of a CPU and/or a digital LSI, installing OS therein and taking time for startup thereof, is started up, in advance, so as to bring it into a waiting condition; thereby shortening the waiting time after the startup of the apparatus.

Similarly, US 6636026 discloses an electric appliance that can save the standby power consumption without sacrificing the convenience of a remote controller and the effect of the warm-up.

### SUMMARY OF THE INVENTION

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

There is provided a system and method for toggling between system power modes based on motion detection. More specifically, in one embodiment, there is provided a video unit comprising a central processing unit, a low-power processor coupled to the central processing unit, a motion detector coupled to the low-power processor, wherein the low-power processor is configured to initiate the central processing unit into a ready power mode as a result of motion detected by the motion detector. A video unit and a method according to the invention are sel out in claims 1 and 6.

### BRIEF DESCRIPTION OF THE DRAWINGS

Advantages of the invention may become apparent upon reading the following detailed description and upon reference to the drawings in which:
FIG. 1 is a block diagram of an electronic system in accordance with an exemplary embodiment of the present invention; and
FIG. 2 is a process flow diagram of a process in accordance with an exemplary embodiment of the present invention.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

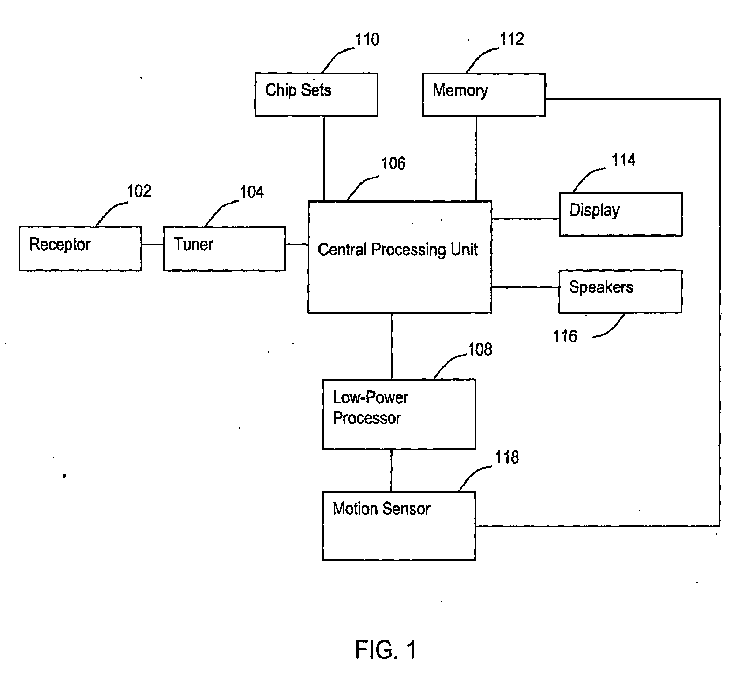

FIG. 1 is a block diagram of an electronic system in accordance with an exemplary embodiment of the present invention. The electronic system is generally indicated by reference numeral 100. Specifically, the electronic system 100 includes a receptor 102, a tuner 104, a central processing unit (CPU) 106, a low-power processor 108, a plurality of chipsets 110, a memory 112, a display 114, speakers 116, and a motion sensor 118. The receptor 102, which may include a cable inlet or an antenna, may be adapted to receive signals, such as audio and video signals, from a provider. The provider may be a terrestrial broadcaster, a cable head-end or the like. The tuner 104 may be adapted to facilitate selection of certain provider signals for presentation on the display 114 and over the speakers 116. The memory 112 may be adapted to hold machine-readable computer code that causes the CPU 106 or low-power processor 108 to perform an exemplary method in accordance with the present invention. The motion sensor 118 may be adapted to detect movement in an area around the motion sensor 118 and initiate a boot-up sequence for the system 100 via the low-power processor 118 if certain conditions are met.

The system 100 may be adapted to operate in various different power modes or states. For example, a first power mode in which the system 100 may be adapted operate may be referred to as an energy saving mode or low-power mode. In the energy saving mode, the system 100 may conserve energy by essentially shutting down certain components that are not being utilized. For example, the CPU 106, the display 114, the speakers 116, and the plurality of chipsets 110, which may include a video processor, may be powered down or turned off to conserve energy and meet energy conservation standard requirements. The low-power processor 108 may remain powered in the energy saving mode to initiate a boot of other system components if activated. The energy saving mode may be entered when the system 100 has been turned off for a certain amount of time (for example, 30 minutes, 1 hour, or 3 hours). The amount of time may be configurable as a factory setting or by a user. A second power mode in which the system 100 may be adapted to operate may be referred to as a ready mode. In the ready mode, the CPU 106 and the plurality of chipsets 110 may be powered or running, thus reducing boot-up time and enabling a "quick start" of the system 100. The ready mode may be entered when there is a high likelihood that a user will activate the system 100. A third power mode in which the system 100 may be adapted to operate may be referred to as a fully powered mode or on-state. In the fully powered mode, all or substantially all of the system components utilized to allow a user to view or listen to media via the system 100 may be powered.

In one exemplary embodiment, the system 100 may include a television or another type of media device (for example, a computer) that is adapted to toggle between power modes (for example, the energy saving mode and the ready mode) based on signals produced by the motion sensor 118. The motion sensor 118 may include active and/or passive motion detection features. For example, the motion sensor 118 may include features that actively emit light, sound, and/or microwaves into the surrounding environment and identify motion by detecting changes in these emissions. In other embodiments, the motion sensor 118 may passively detect infrared (IR) energy that is in the range of energy emitted by the human body. In some embodiments, the motion sensor 118 may be configured to reduce detection of certain motion types, such as pet motion, and environmental intrusions, such as trains passing nearby. The motion sensor 118 may be integral with a main body of the system or it may operate separately from the main body. For example, if the system 100 is a television, the motion sensor 118 may be included within a body of the television or the motion sensor 118 may be a separate device that remotely communicates with the television via cables or wirelessly. In some embodiments, the motion sensor 118 may include multiple sensing devices.

By switching into certain modes based on detected movement around the system 100, the time required to turn on the system 100 may be reduced and/or energy being spent by the system 100 may be reduced. For example, if a user's movement is detected in the same room as the system 100, there is a higher likelihood that the user will activate the system 100 than if no movement is detected. Accordingly, embodiments of the present invention detect such movements and prepare the system 100 for operation by, for example, switching the system 100 from the energy saving mode into the ready mode. Thus, if the user activates the system 100, it will already be in preparation or prepared for a quick start. This reduces the time between the user requesting an on-state and achieving the on-state. On the other hand, when the system 100 is turned off and the user is not present in the same room with the system 100 for an amount of time (for example a defined time value stored in the memory 112), as indicated by not detecting motion, energy may be efficiently conserved by operating the system 100 in the energy saving mode.

In operation, for example, the motion sensor 118 may detect a user's movement around the system 100 and send a signal to the low-power processor 108 indicating that the system 100 should leave an energy saving mode and enter a ready mode based on the detected motion. Thus, when the user actually activates the system 100, it is already prepared for a rapid startup because it has essentially performed a partial pre-boot of the CPU 106. in other words, the pre-boot may limit delay between when the system is powered (for example, pressing the power button) and when the system provides observable media. If the system 100 is not activated within an amount of time (for example, a defined waiting period stored in memory 112), the system 100 may return to the energy saving mode.

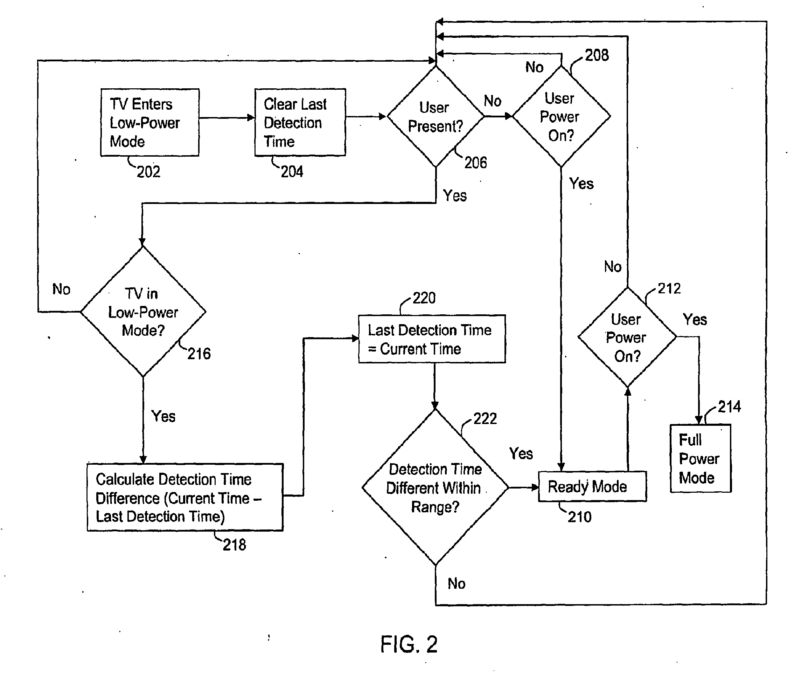

FIG. 2 is a process flow diagram of a process in accordance with an exemplary embodiment of the present invention. The process is generally designated by reference numeral 200. The process 200 is an exemplary procedure for switching between television power modes (for example, a ready mode, a low-power mode, and a full power mode). Exemplary modes in accordance with present embodiments may include the Advanced Configuration and Power Interface (ACPI) standard S5 state and the ACPI standard S4 state. It should be noted that the process 200 is directed to a television system. However, in other embodiments, different electronic devices may be employed.

Specifically, the process 200 includes entering a low-power mode from a different power mode, such as a ready mode, as illustrated by block 202. Block 204 represents clearing a last motion detection time. Block 206 represents a determination of whether a user has been detected. For example, this determination may be performed by analyzing data acquired by the motion sensor 118 to determine whether motion has been detected within a certain area of interest (for example, a living room). If it is determined that a user is not present (for example, a user's motion has not been detected), a determination is made in block 208 regarding whether a user request for power (on-state request) has been received. Block 208 may include detecting whether a power feature, such as a power button, has been activated either directly or remotely. If power has been activated, the process 100 proceeds to a ready mode, as represented by block 210. Next, because the power has been activated, the process 100 continues through block 212 and enters full power mode, as represented by block 214. If a determination is made in block 208 that no power feature has been activated, the process 100 returns to block 206.

If a determination is made in block 206 that a user is present (for example, the motion sensor 118 indicates detected motion), the process 100 proceeds to block 216. In block 216, a determination is made as to whether the television is in the low-power mode. If the television is not in the low-power mode, the process returns to determining whether the user is present in block 206. If the television is determined to be in low-power mode in block 216, a detection time difference may be calculated in block 218. Specifically, in block 218 a time value associated with a last user detection may be subtracted from a time value associated with the current user detection. The procedure represented by block 218 results in a determination of time between user detections, which may be utilized to confirm that a user is actually or consistently present. For example, if the difference value is small, this may indicate that frequent movement is occurring and that a user is consistently proximate an area of interest. It should be noted that the value of the last detection time may be set to a default value if an actual value is unavailable. Further, it should be noted that in other embodiments, different calculations may be utilized to confirm the user's presence.

In block 220, the last user detection time is set equal to the current time for future determinations. In block 222, a determination is made as to whether the detection time difference is within a certain range (for example, below a designated threshold). If the time difference is within the range, the process 100 proceeds to block 210 and the ready mode is entered. Next, in block 212, a determination is made as to whether the user has provided a power on command. If so, the full power mode is entered in block 214. Otherwise, the process returns to block 206 to determine whether the user is present.

While the invention may be susceptible to various modifications and alternative forms, specific embodiments have been shown by way of example in the drawings and will be described in detail herein.

However, it should be understood that the invention is not intended to be limited to the particular forms disclosed. Rather, the invention is to cover all modifications, equivalents and alternatives falling within the scope of the invention as defined by the following appended claims.

## Claims

1. A video unit (100), comprising:
a central processing unit (106);
a low-power processor (108) coupled to the central processing unit (106); and
a motion detector (118) coupled to the low-power processor (108) and configured to detect motion of a user in the environment around the video unit (100), and
a comparison circuit (108) configured to determine a time difference between current and past motion detections to confirm consistent presence of a user in an area of interest proximate the video unit (100);
wherein the video unit (100) is configured to operate in a low power mode in which the central processing unit (106) is powered down or turned off and the low-power processor (108) is configured to remain powered on, a ready power mode in which the central processing unit (106) is powered or running, and a full power mode in which the central processing unit (106) is powered or running and power is provided to all or substantially all system components of the video unit (100) to allow viewing or listening of media via the video unit (100);
wherein the video unit (100) is configured to be switched from the ready power mode into the full power mode on activation of a power button; and
wherein the low-power processor (108) is configured to switch the video unit (100) into the ready power mode from the low power mode as a result of the comparison circuit (108) identifying the consistent presence of the user in the area of interest.

2. The video unit of claim 1, wherein the video unit (100) is configured to remain in the ready power mode for a predetermined period of time in the absence of further motion of a user detected by the motion detector (118).

3. The video unit of claim 1, wherein the ready power mode comprises an S4 state as defined by an Advanced Configuration and Power Interface, ACPI, standard.

4. The video unit of claim 1, wherein the motion detector (118) is configured to reduce detection of certain motion not related to motion of users.

5. The video unit of claim 1, wherein the comparison circuit (108) is configured to confirm the consistent presence of the user when the time difference is below a threshold value.

6. A method (200), comprising:
detecting motion of a user at a current time (206) in the environment around an electronic device ;
determining whether the electronic device (216) is in a low power mode in which a central processing unit of the electronic device is powered down or turned off; if so
determining a difference between a value associated with the current time and a value associated with a past time of a past motion detection (218);
determining whether the difference is within a range (222);
switching the electronic device into a ready power mode from the low power mode if the difference is within the range (210), wherein entry into the ready power mode includes powering the central processing unit of the electronic device;
detecting whether a user power on request has been submitted (212); and
switching the electronic device into a full power mode from the ready power mode if a user power on request is detected (214) in which the central processing unit is powered and all or substantially all system components of the electronic device are powered to allow viewing or listening of media via the electronic device.

7. The method of claim 6, comprising setting the value associated with the past time as equal to the value associated with the recent time (220).

8. The method of claim 6, comprising switching the electronic device into the low power mode if no motion is detected for a predetermined amount of time (202).

9. The method of claim 6, comprising clearing the value associated with the past time of the past motion detection (204).

10. The method of claim 6, wherein detecting motion of the user comprises reducing detection of certain motion not related to motion of the user.

## Patentansprüche

1. Videoeinheit (100), umfassend:
eine Zentraleinheit (106);
einen Energiespar-Prozessor (108), der mit der Zentraleinheit (106) verbunden ist; und
einen Bewegungsdetektor (118), der mit dem Energiespar-Prozessor (108) verbunden und dafür ausgelegt ist, die Bewegung eines Benutzers in der Umgebung der Videoeinheit (100) zu erfassen, und
eine Vergleichsschaltung (108), die dafür ausgelegt ist, eine Zeitdifferenz zwischen der aktuellen und früheren Bewegungserkennungen festzustellen, um die permanente Anwesenheit eines Benutzers in einem interessierenden Bereich in der Nähe der Videoeinheit (100) zu bestätigen,
wobei:
die Videoeinheit (100) dafür ausgelegt ist, in einem Energiesparmodus zu arbeiten, in dem die Zentraleinheit (106) stillgelegt oder abgeschaltet ist, und der Energiespar-Prozessor (108) dafür ausgelegt ist, dass er eingeschaltet bleibt, oder in einem Bereitschaftsmodus, in dem die Zentraleinheit (106) eingeschaltet ist oder arbeitet, oder in einem Vollbetriebsmodus, in dem die Zentraleinheit (106) eingeschaltet ist oder arbeitet und alle oder im Wesentlichen alle Systemkomponenten der Videoeinheit (100) mit Energie versorgt werden, damit Medien über die Videoeinheit (100) angesehen oder angehört werden können;
die Videoeinheit (100) dafür ausgelegt ist, dass sie beim Betätigen eines Einschalters aus dem Bereitschaftsmodus in den Vollbetriebsmodus geschaltet wird; und
der Energiespar-Prozessor (108) dafür ausgelegt ist, die Videoeinheit (100) aus dem Energiesparmodus in den Bereitschaftsmodus zu schalten, wenn die Vergleichsschaltung (108) die permanente Anwesenheit des Benutzers in dem interessierenden Bereich erkennt.

2. Videoeinheit nach Anspruch 1, wobei die Videoeinheit (100) dafür ausgelegt ist, dass sie in Abwesenheit einer weiteren Bewegung eines Benutzers, die der Bewegungsdetektor (118) erfasst, für eine vorbestimmte Zeitperiode im Bereitschaftsmodus bleibt.

3. Videoeinheit nach Anspruch 1, wobei der Bereitschaftsmodus einen S4-Status umfasst, der durch einen Advanced Configuration and Power Interface-Standard bzw. ACPI-Standard definiert ist.

4. Videoeinheit nach Anspruch 1, wobei der Bewegungsdetektor (118) dafür ausgelegt ist, die Erfassung einer bestimmten Bewegung, die nichts mit der Bewegung von Benutzern zu tun hat, abzuschwächen.

5. Videoeinheit nach Anspruch 1, wobei die Vergleichsschaltung (108) dafür ausgelegt ist, die permanente Anwesenheit des Benutzers zu bestätigen, falls die Zeitdifferenz unter einem Grenzwert liegt.

6. Verfahren (200), umfassend:
das Erkennen (206) der Bewegung eines Benutzers zu einem aktuellen Zeitpunkt in der Umgebung einer elektronischen Vorrichtung;
das Feststellen (216), ob sich die elektronische Vorrichtung in einem Energiesparmodus befindet, in dem eine Zentraleinheit der elektronischen Vorrichtung stillgelegt oder ausgeschaltet ist; wenn dies zutrifft
das Feststellen (218) einer Differenz zwischen einem Wert, der dem aktuellen Zeitpunkt zugeordnet ist, und einem Wert, der einem vergangenen Zeitpunkt einer früheren Bewegungserfassung zugeordnet ist;
das Feststellen (222), ob sich die Differenz innerhalb eines Bereichs befindet;
das Schalten (210) der elektronischen Vorrichtung aus dem Energiesparmodus in einen Bereitschaftsmodus, falls die Differenz in dem Bereich liegt, wobei der Eintritt in den Bereitschaftsmodus das Versorgen der Zentraleinheit der elektronischen Vorrichtung mit Energie umfasst;
das Feststellen (212), ob eine Einschaltanforderung durch den Benutzer vorliegt; und
falls eine Einschaltanforderung durch den Benutzer erkannt wird, das Schalten (214) der elektronischen Vorrichtung aus dem Bereitschaftsmodus in den Vollbetriebsmodus, in dem die Zentraleinheit eingeschaltet ist und alle oder im Wesentlichen alle Systemkomponenten der elektronischen Vorrichtung eingeschaltet sind, damit Medien über die elektronische Vorrichtung angesehen oder angehört werden können.

7. Verfahren nach Anspruch 6, umfassend das Setzen (220) des Werts, der dem vergangenen Zeitpunkt zugeordnet ist, auf den Wert, der dem aktuellen Zeitpunkt zugeordnet ist.

8. Verfahren nach Anspruch 6, umfassend das Schalten (202) der elektronischen Vorrichtung in den Energiesparmodus, falls für eine vorbestimmte Zeitspanne keine Bewegung erkannt wird.

9. Verfahren nach Anspruch 6, umfassend das Löschen (204) des Werts, der zu dem vergangenen Zeitpunkt der früheren Bewegungserkennung gehört.

10. Verfahren nach Anspruch 6, wobei das Erkennen der Bewegung des Benutzers das Abschwächen einer bestimmten Bewegung, die nichts mit der Bewegung des Benutzers zu tun hat, umfasst.

## Revendications

1. Unité vidéo (100), comprenant :
une unité de traitement centrale (106) ;
un processeur basse puissance (108) couplé à l'unité de traitement centrale (106) ; et
un détecteur de mouvement (118) couplé au processeur basse puissance (108) et configuré pour détecter un mouvement d'un utilisateur dans l'environnement autour de l'unité vidéo (100), et
un circuit de comparaison (108) configuré pour déterminer une différence de temps entre des détections de mouvements courants et passés afin de confirmer la présence constante d'un utilisateur dans une zone d'intérêt à proximité de l'unité vidéo (100) ;
où l'unité vidéo (100) est configurée pour fonctionner selon un mode de basse puissance dans lequel l'unité de traitement centrale (106) fonctionne sous une alimentation réduite ou est mise hors service, et le processeur basse puissance (108) est configuré pour rester en service, en mode prêt dans lequel l'unité de traitement centrale (106) est alimentée ou en service, et un mode de pleine puissance dans lequel l'unité de traitement centrale (106) est alimentée ou en service et de la puissance est fournie à tous ou sensiblement tous les composants système de l'unité vidéo (100) pour permettre de voir ou d'écouter des médias par l'intermédiaire de l'unité vidéo (100) ;
où l'unité vidéo (100) est configurée pour être commutée du mode prêt en mode de pleine puissance lors de l'activation d'un bouton d'alimentation ; et
où le processeur basse puissance (108) est configuré pour commuter l'unité vidéo (100) en mode Prêt depuis le mode de basse puissance après que le circuit de comparaison (108) a identifié la présence constante de l'utilisateur dans la zone d'intérêt.

2. Unité vidéo selon la revendication 1, où l'unité vidéo (100) est configurée pour rester en mode prêt pendant une période de temps prédéterminée en l'absence d'un autre mouvement d'un utilisateur détecté par le détecteur de mouvement (118).

3. Unité vidéo selon la revendication 1, où le mode prêt comprend un état S4 tel que défini par un standard de Configuration Avancée et d'Interface de Puissance, ACPI.

4. Unité vidéo selon la revendication 1, où le détecteur de mouvement (118) est configuré pour réduire la détection de certains mouvements non liés au mouvement des utilisateurs.

5. Unité vidéo selon la revendication 1, où le circuit de comparaison (108) est configuré pour confirmer la présence constante de l'utilisateur lorsque la différence de temps se situe en dessous d'une valeur de seuil.

6. Procédé (200), comprenant :
détecter le mouvement d'un utilisateur à un temps courant (206) dans l'environnement autour d'un dispositif électronique ;
déterminer si le dispositif électronique (216) se trouve en mode basse puissance dans lequel une unité de traitement centrale du dispositif électronique est à puissance réduite ou mise hors service; et si cela est le cas
déterminer une différence entre une valeur associée au temps courant et une valeur associée à un temps passé d'une détection de mouvement passé (218) ;
déterminer si la différence est dans une plage (222) ;
commuter le dispositif électronique en mode prêt depuis le mode de basse puissance si la différence est dans la page (210), où l'entrée en mode prêt inclut l'alimentation de l'unité de traitement centrale du dispositif électronique ;
détecter si une puissance utilisateur sur demande a été soumise (212) ; et
commuter le dispositif électronique en mode de pleine puissance depuis le mode prêt si une puissance utilisateur sur demande a été détectée (214) dans lequel l'unité de traitement centrale est alimentée et tous ou sensiblement tous les composants système du dispositif électronique sont alimentés pour permettre de voir ou d'écouter des médias par l'intermédiaire du dispositif électronique.

7. Procédé selon la revendication 6, comprenant le réglage de la valeur associée au temps passé pour qu'elle soit égale à la valeur associée au temps récent (220).

8. Procédé selon la revendication 6, comprenant la commutation du dispositif électronique en mode de basse puissance si aucun mouvement n'a été détecté pendant une quantité de temps prédéterminée (202).

9. Procédé selon la revendication 6, comprenant l'effacement de la valeur associée au temps passé de la détection de mouvement passé (204).

10. Procédé selon la revendication 6, dans lequel la détection du mouvement de l'utilisateur comprend la réduction de la détection de certains mouvements non liés au mouvement de l'utilisateur.
